# EUROPÄISCHE PATENTANMELDUNG

(11) **EP 1 071 240 A2**
(43) Veröffentlichungstag der Anmeldung: **24.01.2001**
(21) Anmeldenummer: 00113511.0
(22) Anmeldetag: 26.06.2000
(51) Int. Cl.: H04L 1/24

(54) **Vorrichtung und Verfahren zur Datenübertragung mit gezielter Störsignalerzeugung zu Testzwecken**

(30) Priorität: 22.07.1999 DE 19934565
(71) Anmelder: SIEMENS AKTIENGESELLSCHAFT, 80333 München (DE)
(72) Erfinder: Schweikart, Matthias, Dipl-Ing., 91056 Erlangen (DE)

(57) **Zusammenfassung**

Die Erfindung betrifft eine Vorrichtung und ein Verfahren zur Datenübertragung. Für einen gezielten Test eines Datenübertragungsstrecke und der in der Datenübertragungsstrecke angeordneten Datenübertragungsvorrichtungen wird vorgeschlagen, daß eine sendende Datenübertragungsvorrichtung Mittel zur Erzeugung von mindestens einem Störsignal aufweist. Hierdurch wird es ohne zusätzlichen Aufwand möglich, einen Test der Datenübertragungsstrecke durchzuführen.

## Beschreibung

Die Erfindung betrifft eine Vorrichtung zur Datenübertragung, insbesondere ein Kommunikationsendgerät mit einer Sendevorrichtung zum Senden eines Signals über ein Datenübertragungssystem an eine Empfangsvorrichtung.

Die Erfindung betrifft weiter einen integrierten Schaltkreis für ein Kommunikationsendgerät sowie ein Verfahren zur gezielten Übertragung eines Störsignals über eine Datenübertragungsstrecke für Testzwecke.

Eine derartige Vorrichtung kommt bei Datenübertragungssystemen zum Einsatz, bei denen bei der Inbetriebnahme oder im Störungsfall ein gezielter Systemtest der Datenübertragungseinrichtungen und/oder der Datenübertragungsstrecken erforderlich ist.

Der Erfindung liegt die Aufgabe zugrunde, auf einfache und kostengünstige Weise eine gezielte und reproduzierbare Erzeugung eines Störsignals für Testzwecke zu ermöglichen.

Diese Aufgabe wird bei einer Vorrichtung der eingangs genannten Art dadurch gelöst, daß die Vorrichtung Mittel zur Erzeugung mindestens eines vorgebbaren Störsignals zu Testzwecken aufweist.

Diese Aufgabe wird weiter durch einen integrierten Schaltkreis für ein Kommunikationsendgerät mit Mitteln zur Erzeugung mindestens eines vorgebbaren Störsignals zu Testzwecken gelöst.

Diese Aufgabe wird weiter durch ein Verfahren zur gezielten Übertragung eines Störsignals über eine Datenübertragungsstrecke für Testzwecke gelöst, bei dem das Störsignal in einem Kommunikationsendgerät erzeugt und an eine vorgebbare Empfangsvorrichtung gesendet wird.

Der Erfindung liegt die Erkenntnis zugrunde, daß der Einsatz von speziellen Prüfeinrichtungen weitestgehend überflüssig wird, wenn die Vorrichtung zur Datenübertragung selbst bereits Mittel zur gezielten Erzeugung und Aussendung von Störsignalen aufweist. Ein derartiges Störsignal kann jederzeit reproduzierbar und gezielt für eine Inbetriebnahme oder einen Systemtest von Datenübertragungseinrichtungen und Datenübertragungssystemen eingesetzt werden. Ein fehlerhaftes Auslösen des Testsignals kann dadurch vermieden werden, daß für eine Aktivierung der Testfunktion, d.h. für eine Erzeugung eines Testsignals eine spezielle vorgebbare Tastenkombination der Vorrichtung zur Datenübertragung betätigt werden muß.

Eine gut reproduzierbare Realisierung der Erzeugung des Störsignals kann dadurch erzielt werden, daß die Mittel zur Erzeugung des vorgebbaren Störsignals einen Speicher umfassen, in dem das Störsignal gespeichert ist.

Die Anwendungsmöglichkeiten auch in Richtung einer Auswertung eines eigenen oder von anderen Endgeräten empfangenen Störsignals können dadurch erweitert werden, daß die Vorrichtung weitere Mittel zur Auswertung eines empfangenen Störsignals aufweist. So kann beispielsweise von einem ersten Kommunikationsendgerät ein Störsignal über eine zu testende Übertragungsstrecke an ein zweites Kommunikationsendgerät gesendet werden, wobei das Störsignal vom zweiten Kommunikationsendgerät wieder an das erste Kommunikationsendgerät zurückgesendet und dort im ersten Kommunikationsendgerät sofort ausgewertet werden kann.

Bei einer vorteilhaften Ausgestaltung sind die Mittel zur Erzeugung mindestens eines vorgebbaren Störsignals in einem Schaltkreis integriert, der ein Konfigurationsregister zur Erzeugung von Telegrammen als Störsignal, die insbesondere folgende Fehler beinhalten: Längenfehler, CRC-Fehler, Verzerrungen, Verzögerungen, Lücken, Kanalausfall. Hierdurch wird das Kommunikationsendgerät in die Lage versetzt, jederzeit gezielt ein entsprechendes Störsignal liefern zu können, ohne daß eine aufwendige Spezialausrüstung hierfür erforderlich ist.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Datenübertragungssystems mit einer Vorrichtung zur Datenübertragung mit Störsignalerzeugung und
- FIG 2: ein Blockschaltbild eines zweiten Ausführungsbeispiels eines Datenübertragungssystems mit einer Vorrichtung zur Datenübertragung mit Störsignalerzeugung und Störsignalauswertung.

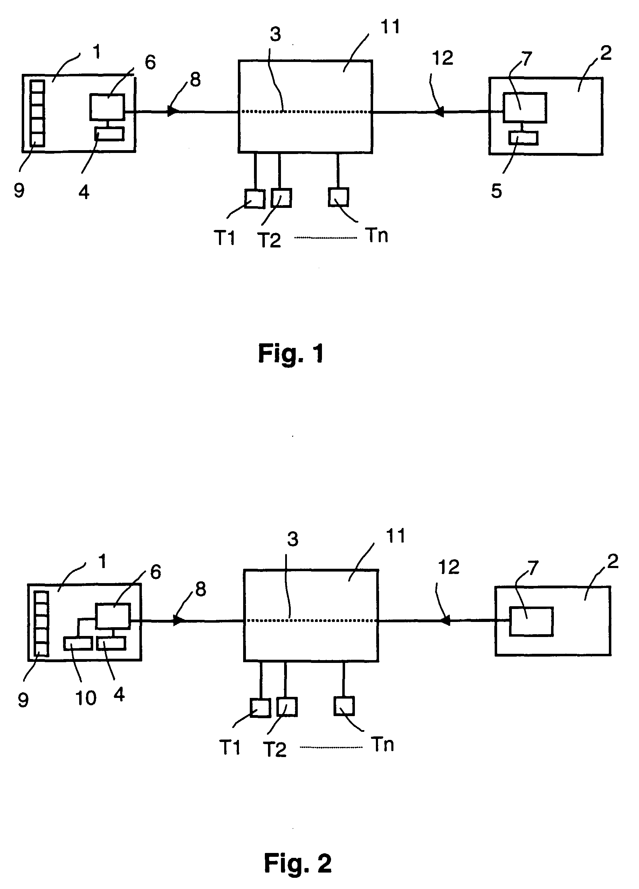

FIG 1 zeigt ein Blockschaltbild eines Datenübertragungssystems mit einer ersten Datenübertragungsvorrichtung 1 und einer zweiten Datenübertragungsvorrichtung 2, die über einen Datenübertragungskanal 3 miteinander verbindhar sind. Der Datenübertragungskanal 3 ist Teil eines Kommunikationsnetzes 11, beispielsweise eines Netzbetreibers, an den eine Vielzahl von Teilnehmerendgeräten T1..Tn angeschlossen sind. Die erste Datenübertragungsvorrichtung 1 weist eine Vorrichtung 4 zur Erzeugung von Störsignalen sowie eine Sendevorrichtung 6 auf. Darüber hinaus ist die Datenübertragungsvorrichtung 1 mit einem Bedienfeld 9 versehen. Die zweite Datenübertragungsvorrichtung 2 enthält eine Empfangsvorrichtung 7 zum Empfang eines von der ersten Datenübertragungsvorrichtung 1 abgesendeten Störsignals 8 sowie eine Auswertevorrichtung 5 zur Auswertung des Störsignals 8.

Die Besonderheit des in FIG 1 dargestellten Datenübertragungssystems besteht darin, daß die erste Datenübertragungsvorrichtung 1 Mittel 4 zur Erzeugung mindestens eines vorgebbaren Störsignals 8 zu Testzwecken aufweist. Hierdurch wird die erste Datenübertragungsvorrichtung 1 in die Lage versetzt, ohne großen Aufwand gezielt Störungen zu produzieren. Diese Funktionalität kommt insbesondere bei der Inbetriebnahme, bei einem Systemtest, bei Entwicklungssimulationen etc. zum Einsatz. Die Mittel 4 zur Erzeugung des Störsignals 8 bestehen dabei beispielsweise aus einem Speicher 4, in dem Störsignale abgelegt und gezielt abrufbar sind. Derartige Störsignale betreffen beispielsweise die gezielte Erzeugung von falschen Telegrämmlängen, von CRC- und Checksum-Fehlern, von Adressierungsfehlern, von Verzerrungen, von Spikes, von Parity-Fehlern, von Telegrammlücken usw.. Die so erweiterte Funktionalität der ersten Datenübertragungsvorrichtung 1 kann insbesondere auf einfache Weise dadurch erzielt werden, daß im integrierten Schaltkreis der Datenübertragungsvorrichtung 1, der für den Betrieb der Datenübertragungsvorrichtung 1 ohnehin benötigt wird, ein zusätzliches Konfigurationsregister eingebaut wird, mit dessen Hilfe gezielt Telegramme als Störsignal erzeugt werden können, die beispielsweise wahlweise folgende Fehler beinhalten: Längenfehler, CRC-Fehler, Verzerrungen, Verzögerungen, Lücken, Kanalausfall. Die Aktivierung des Betriebsmodus "Erzeugung eines Störsignals" kann mit Hilfe der Bedientastatur 9, beispielsweise in der Weise erfolgen, daß eine bestimmte Tastenkombination des Bedienfelds 9 betätigt wird. Hierdurch wird vermieden, daß fehlerhafter Weise ein Störsignal 8 erzeugt wird. Das in der ersten Datenverarbeitungsvorrichtung 1 erzeugte Störsignal 8 wird an die zweite Datenübertragungsvorrichtung 2, insbesondere an die Empfangsvorrichtung 7 sowie die Auswertevorrichtung 5 oder an ein weiteres Teilnehmerendgerät T1..Tn weitergeleitet.

FIG 2 zeigt ein weiteres Ausführungsbeispiel eines Datenübertragungssystems. Dabei werden die bereits in Zusammenhang mit FIG 1 eingeführten Bezugszeichen verwendet. Im Gegensatz zu dem in FIG 1 dargestellten Ausführungsbeispiel enthält die erste Datenverarbeitungsvorrichtung 1 neben der Vorrichtung 4 zur Erzeugung eines Störsignals 8 darüber hinaus eine Auswertevorrichtung 10 zur Auswertung eines an die erste Datenübertragungsvorrichtung zurückgesendeten Störsignals 12. Bei einem derartigen zurückgesendeten Störsignal 12 handelt es sich beispielsweise um ein Antwortsignal auf das von der ersten Datenübertragungsvorrichtung 1 ausgesendete Störsignal. In diesem Fall wird das Störsignal 8 in gewohnter Weise in der ersten Datenverarbeitungsvorrichtung 1 erzeugt und über das Datenübertragungssystem 11, d.h. die Übertragungsstrecke 3 an die zweite Datenübertragungsvorrichtung 2 gesendet. In der zweiten Datenübertragungsvorrichtung 2 wird das zu empfangene Störsignal in der Empfangsvorrichtung 7 empfangen und mit Hilfe einer Sendevorrichtung als Antwortstörsignal 12 an die erste Datenverarbeitungsvorrichtung 1 zurückgesendet. In der Datenübertragungsvorrichtung 1 wird dieses zurückgesendete Störsignal 12 in einer Auswertevorrichtung 10 entsprechend ausgewertet. Der Vorteil der in FIG 2 dargestellten Datenübertragungsvorrichtung 1 besteht insbesondere darin, daß das Kommunikationsendgerät 1 sowohl eine Störsignalerzeugung als auch eine Störsignalauswertung ermöglicht. Als auszuwertende Störsignale 12 können dabei sowohl selbst erzeugte Störsignale 8 oder auch in einer weiteren Datenübertragungsvorrichtung 2 oder einem weiteren Teilnehmerendgerät T1..Tn erzeugte Störsignale ausgewertet werden.

Zusammenfassend betrifft die Erfindung somit eine Vorrichtung und ein Verfahren zur Datenübertragung. Für einen gezielten Test eines Datenübertragungsstrecke und der in der Datenübertragungsstrecke angeordneten Datenübertragungsvorrichtungen wird vorgeschlagen, daß eine sendende Datenübertragungsvorrichtung Mittel zur Erzeugung von mindestens einem Störsignal aufweist. Hierdurch wird es ohne zusätzlichen Aufwand möglich, einen Test der Datenübertragungsstrecke durchzuführen.

## Patentansprüche

1. Vorrichtung (1) zur Datenübertragung, insbesondere Kommunikationsendgerät mit einer Sendevorrichtung (6) zum Senden eines Signals über ein Datenübertragungssystem (3) an eine Empfangsvorrichtung (7),
**dadurch gekennzeichnet**,
daß die Vorrichtung (1) Mittel (4) zur Erzeugung mindestens eines vorgebbaren Störsignals (8) zu Testzwecken aufweist.

2. Vorrichtung nach Anspruch 1,
**dadurch gekennzeichnet**,
daß die Mittel (4) zur Erzeugung des vorgebbaren Störsignals (8) einen Speicher umfassen, in dem das Störsignal (8) gespeichert ist.

3. Vorrichtung nach einem der Ansprüche 1 oder 2,
**dadurch gekennzeichnet**,
daß die Vorrichtung (1) weitere Mittel (10) zur Auswertung eines empfangenen Störsignals (12) aufweist.

4. Vorrichtung nach einem der Ansprüche 1 bis 3,
**dadurch gekennzeichnet**,
daß die Mittel (4) zur Erzeugung mindestens eines vorgebbaren Störsignals (8) in einem Schaltkreis integriert sind, der ein Konfigurationsregister zur Erzeugung von Telegrammen als Störsignal, die insbesondere folgende Fehler beinhalten: Längenfehler, CRC-Fehler, Verzerrungen, Verzögerungen, Lücken, Kanalausfall.

5. Integrierter Schaltkreis für ein Kommunikationsendgerät (1) mit Mitteln (4) zur Erzeugung mindestens eines vorgebbaren Störsignals (8) zu Testzwecken aufweist.

6. Schaltkreis nach Anspruch 5,
**dadurch gekennzeichnet**,
daß der Schaltkreis ein Konfigurationsregister zur Erzeugung von Telegrammen als Störsignal, die insbesondere folgende Fehler beinhalten: Längenfehler, CRC-Fehler, Verzerrungen, Verzögerungen, Lücken, Kanalausfall.

7. Verfahren zur gezielten Übertragung eines Störsignals (8) über eine Datenübertragungsstrecke (3) für Testzwecke, bei dem das Störsignal (8) in einem Kommunikationsendgerät (1) erzeugt und an eine vorgebbare Empfangsvorrichtung (5) gesendet wird.

8. Verfahren nach Anspruch 7,
**dadurch gekennzeichnet**,
daß das Störsignal (8) in einem Speicher gespeichert ist und für die gezielte Übertragung aus dem Speicher ausgelesen wird.

9. Verfahren nach einem der Ansprüche 7 oder 8,
**dadurch gekennzeichnet**,
daß das zu einem entfernen Ort übertragene Störsignal (8) am entfernten Ort ausgewertet wird und/oder vom entfernten Ort an das Kommunikationsendgerät (1) zurückgesendet wird.

10. Verfahren nach einem der Ansprüche 7 bis 9,
**dadurch gekennzeichnet**,
daß als Störsignal (8) Telegramme, die insbesondere folgende Fehler beinhalten: Längenfehler, CRC-Fehler, Verzerrungen, Verzögerungen, Lücken, Kanalausfall, erzeugt werden, wobei das Störsignal (8) mit Hilfe eines Konfigurationsregisters eines integrierten Schaltkreises erzeugt wird.
